# EUROPEAN PATENT APPLICATION

(11) **EP 4 016 087 A1**
(43) Date of publication of application: **22.06.2022**
(21) Application number: 21214550.2
(22) Date of filing: 14.12.2021
(51) Int. Cl.: G01P 3/66, G01P 3/50

(54) **METHODS FOR MEASURING TRAVERSE SPEEDS IN ADDITIVE MANUFACTURING SYSTEMS**

(30) Priority: 16.12.2020 US 202017123766
(71) Applicant: ROSEMOUNT AEROSPACE INC., Burnsville, MN 55306-4898 (US)
(72) Inventor: PITERA, Rudy, Woodbury, 55125 (US); WIGEN, Scott, Eagan, MN (US); BOSWORTH, Alexander, Simsbury, CT (US)
(74) Representative: Dehns

(57) **Abstract**

A method and an electrical circuit (10) for measuring the traverse speed of an additive manufacturing system energy source includes installing the electrical circuit (10) within a region (22) of the additive manufacturing system and translating the energy source along a first segment of a path within the region (22) that intersects the electrical circuit. While the energy source traverses the path, the energy source modifies the electrical circuit (10) by adding or removing material, causing a permanent change in the circuit, leading to a corresponding change of an electrical signal of the circuit, which is sensed by a monitoring circuit. The traverse speed of the energy source is determined based on the change in the electrical signal and a geometry of the electrical circuit (10) along the first segment.

## Description

### BACKGROUND

The present invention relates to methods and devices for measuring actuation speeds for a machine and, in particular, to measuring the traverse speed of an energy source used in additive manufacturing systems.

Additive manufacturing systems utilize various techniques to produce components layer-by-layer in contrast to subtractive manufacturing techniques, which produce components by removing material from material stock. For instance, powder bed fusion (PBF) techniques utilize a laser (i.e., laser powder bed fusion) or an electron beam (i.e., electron beam power bed fusion) to melt layers of raw material within a material bed. Selective laser sintering (SLS) employs a laser to heat material particles fusing sequential layers into a solid component without melting the material. Stereolithography produces parts by directing laser energy into a liquid material to solidify the material into a solid component. Directed energy deposition (DED) utilizes a laser or other energy source to melt material fed into the beam in the form of a powder or a feed wire. The liquidized material deposits onto a substrate where it solidifies. Each additive manufacturing technique uses an energy source to melt or sinter raw material to form sequential layers of the component. A key parameter in these processes is the energy density delivered to consolidate the material, which is directly proportional to the power and the traverse speed of the energy source. Accurate calibration of the traverse speed is necessary for successful operation of the additive manufacturing system.

### SUMMARY

A method for measuring the traverse speed of an additive manufacturing system energy source includes installing an electrical circuit within a region of the additive manufacturing system and translating the energy source along a first segment of a path within the region that intersects the electrical circuit. While the energy source traverses the path, the energy source modifies the electrical circuit causing a change in an electrical signal of the circuit sensed by a monitoring circuit. The traverse speed of the energy source is determined based on a time associated with the change in the electrical signal and a geometry of the electrical circuit along the first segment.

### BRIEF DESCRIPTION OF THE DRAWINGS

FIG. 1 is a schematic of an electrical circuit in a closed-circuit configuration.
FIG. 2 is a schematic of an electrical circuit in an open-circuit configuration.
FIG. 3A is an exemplary electric signal showing a decreasing stepped profile associated with an electrical circuit in the closed-circuit configuration of FIG. 1.
FIG. 3B is an exemplary electric signal showing an increasing stepped profile associated with an electrical circuit in the open-circuit configuration of FIG. 2.
FIG. 4 is an electrical circuit comprising multiple parallel resistor assemblies arranged along perpendicular segments of the path.
FIG. 5 is an electrical circuit comprising multiple parallel resistor assemblies arranged along oblique segments of the path.
FIG. 6 is an electrical circuit comprising resistors arranged in parallel along an arbitrary path.
FIG. 7 is an electrical circuit comprising multiple current sources in an open-circuit configuration.

### DETAILED DESCRIPTION

As disclosed herein is an electrical circuit mountable along a path of an energy source defined within a region of an additive manufacturing system. The electrical circuit includes two or more resistors arranged in parallel with an open-circuit or closed-circuit configuration. In closed-circuit configurations, the parallel resistor assembly is initially connected in series with a constant current source and a monitoring circuit. While the additive manufacturing system operates, the monitoring circuit measures a voltage across the resistors as a laser, an electron beam, or other energy source acts to sequentially disconnect each resistor from the electrical circuit. Because removing resistors from a parallel resistor configuration increases the effective resistance of the assembly and the current remains constant, the voltage measured by the monitoring circuit increases with the elimination of each resistor. In open-circuit configurations, the parallel resistor assembly is not connected in series with the constant current source and the monitoring circuit. Instead of disconnecting the resistors from the electrical circuit, operation of the energy source along the path consolidates or deposits material to electrically connect each resistor in parallel with each other and electrically connect the parallel resistor assembly in series with the constant current source. With this configuration, the measured voltage across the resistor assembly decreases as each resistor is added to the circuit. In either configuration, a traverse speed of the energy source can be calculated based on a known distance between adjacent resistors and a time between voltage signal changes detected by the monitoring circuit.

The resistors can be arranged along any path of the energy source, which can include linear paths, curved paths, or any combination of one or more linear paths and one or more curve paths. The disclosed embodiments utilize parallel resistor assemblies, each assembly employing at least two resistors and up to an arbitrary number of resistors represented by the subscript m.

Additive manufacturing systems commonly use laser and electron beams to consolidate material. However, the following disclosure applies to any energy source capable of directing focused energy along a path, consolidating or depositing material to form a component.

Calibration parameters of the additive manufacturing system can be optimized based on the measured traverse speed of the energy source so that set speeds more accurately reflect the actual speeds of the energy source, and therefore the actual energy densities applied to the material. Measuring multiple traverse speeds of the energy source enables the entire operating range of the energy source to be optimized including different actuation directions and set speeds of the energy source.

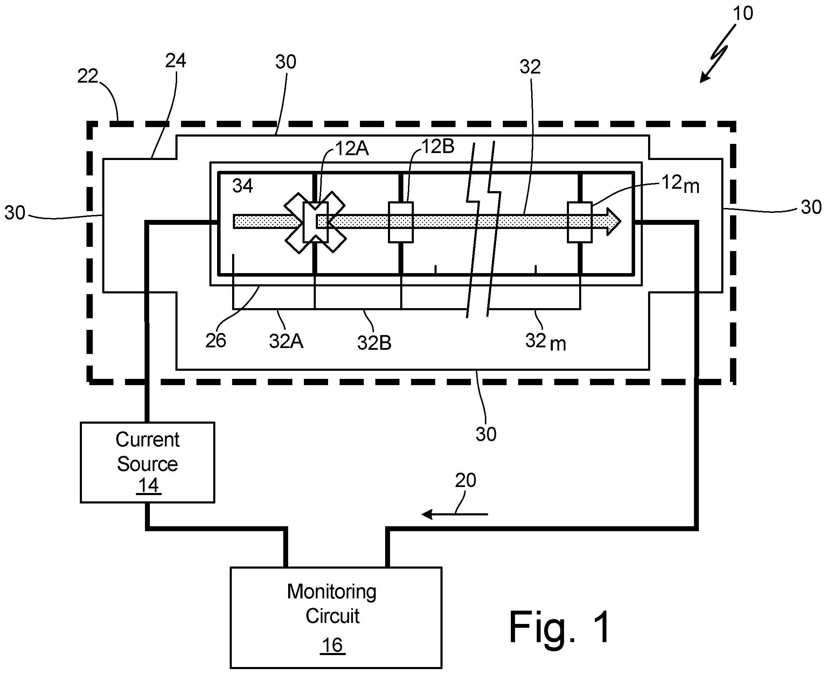

FIG. 1 is a schematic of electrical circuit 10 comprising resistors 12A, 12B, and up to resistor 12*ₘ*, constant current source 14, and monitoring circuit 16. Resistors 12A and 12B through 12*ₘ* are connected in parallel to each other to form parallel resistor assembly 12. Each resistor can have the same resistance or, in other embodiments, some or all of resistors 12A, 12B, through 12*ₘ* can have different resistance than the other resistors. Accordingly, parallel resistance assembly 12 includes net resistance Rₙₑₜ equal to the reciprocal of the summation of resistances 12A, 12B, through 12m as is known in the art. Constant current source 14 and monitoring circuit 16 are connected in series with resistor assembly 12. Constant current source 14 can be any conventional current source capable of outputting constant current 18 to parallel resistor assembly 12 in view of a variable net resistance Rₙₑₜ. Similarly, monitoring circuit 16 can be any conventional device capable of measuring electrical signal 20 that varies as a function of net resistance Rₙₑₜ of parallel resistor assembly 12.

Additive manufacturing systems include region 22 within which manufacturing operations take place. While operational region 22 may vary based on the particular system, generally operational region 22 is a three-dimensional space described by three mutually orthogonal axes X, Y, and Z representing length, width, and height of the component.

Electrical circuit 10 can be installed within region 22 of an additive manufacturing system. In some embodiments, only a portion of electrical circuit 10 can be installed within region 22. For example, installing parallel resistor assembly 12 within region 22 while mounting constant current source 14 and monitoring circuit 16 external to region 22 increases modularity as different configurations of electrical circuit 10 can be installed using the same or identical constant current source 14 and monitoring circuit 16. In other examples, the entirety of electrical circuit 10 can be installed within region 22 of additive manufacturing system.

Installation of electrical circuit 10, or a portion thereof, can be facilitated by fixture 24, which is tailored for a specific additive manufacturing system. For example, fixture 24 can include mount 26 for attaching electric circuit 10 to fixture 24. Mount 26 can include any suitable threaded hole or pin pattern corresponding to a through-hole pattern on substrate 28 of electrical circuit 10 to which resistors 12A, 12B, through 12*ₘ* are installed. Other versions of mount 26 can include a pocket recessed into a body of fixture 24 having a shape that corresponds to a shape of substrate 28. In this way, corresponding mating surfaces of mount 26 and substrate 28 restrain electrical circuit 10, or a portion thereof, at a desired location within region 22. Mount 26 may also include clamping features to restrain at least a portion of electrical circuit 10 relative to fixture 24.

Fixture 24 includes one or more reference features 30 configured to engage corresponding surfaces of region 22. Geometry of mount 26 and reference features 30 can be configured to position electrical circuit 10 within region 22 of the additive manufacturing system. For example, mount 26 can be configured to position electrical circuit 10 anywhere within an operational range of the additive manufacturing system including near or at limits of the operational range and/or at intermediate locations between operational limits of the additive manufacturing system.

As depicted in FIG. 1, electrical circuit 10 has a closed-circuit configuration so that resistors 12A, 12B, through 12*ₘ* are initially connected in parallel with respect to each other, and the position of parallel resistor assembly 12 within region 22 intersects at least part of path 32 traversed by energy source 34 at a desired set speed. Path 32 intersects each of resistors 12A, 12B, through 12*ₘ* such that during operation of energy source 34, resistors 12A, 12B, through 12*ₘ* are sequentially disconnected from electrical circuit 10. As each resistor 12A, 12B, through 12m is disconnected from electrical circuit 10, net resistance Rₙₑₜ changes to equal the reciprocal of the sum of the resistors that remain connected to electrical circuit 10, effectively increasing net resistance Rₙₑₜ until all resistors are disconnected from electrical circuit 10 after which net resistance Rₙₑₜ is zero.

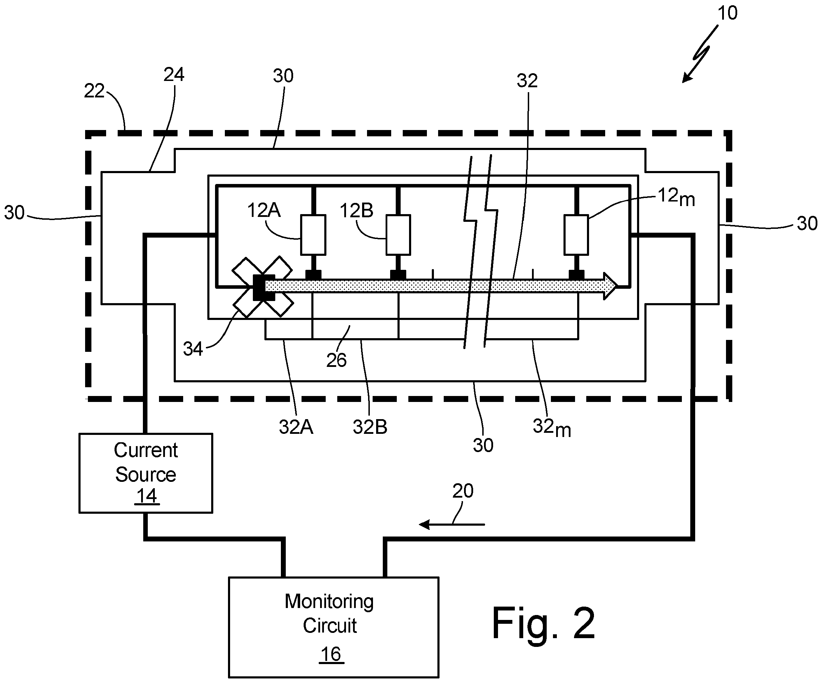

FIG. 2 is a schematic of another embodiment of electrical circuit 10 in which resistors 12A, 12B, through 12*ₘ* have an open-circuit configuration. Initially, first leads 36A, 36B, through 36ₘ are electrically connected along circuit leg 38 while second leads 40A, 40B, through 40ₘ are initially disconnected from electrical circuit 10. Path 32 of energy source 34 intersects second leads 40A, 40B, through 40ₘ of resistors 12A, 12B, through 12*ₘ*. For some additive manufacturing techniques (e.g., powder bed fusion, selective laser sintering, stereolithography), material can be pre-distributed between each pair of adjacent leads 40A, 40B, through 40*ₘ* and consolidated using energy source 34. In other additive manufacturing techniques (e.g., directed energy deposition), liquified material can be deposited along leads 40A, 40B, through 40*ₘ* where it solidifies. Upon connection of each lead 40A, 40B, through 40*ₘ*, respective resistors 12A, 12B, through 12*ₘ* are connected to electric circuit 10, which causes a voltage change in electrical circuit 10. Since constant current source 14 is used, the addition of resistance to electrical circuit 10 increases a voltage measured across parallel resistance assembly 12.

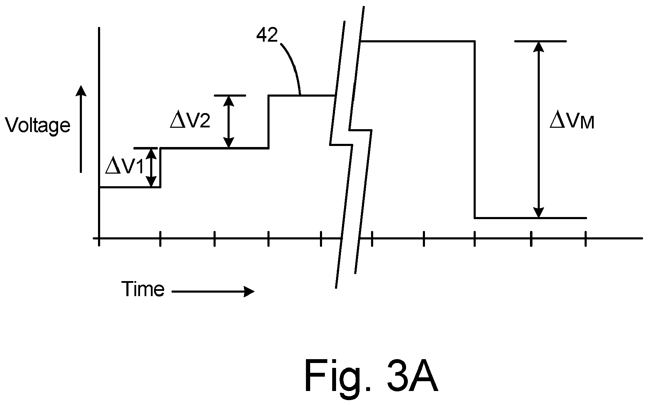

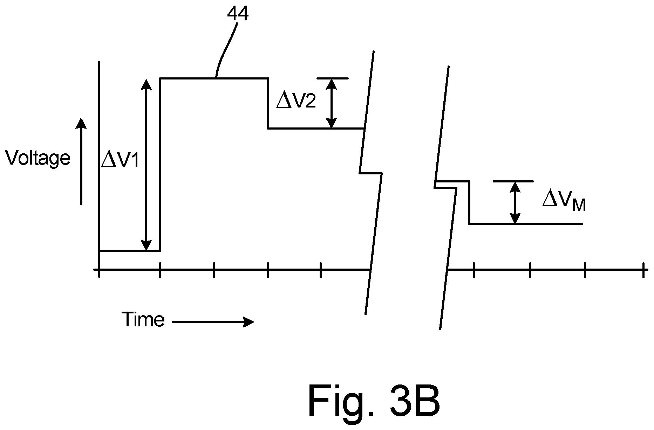

Whether a closed-circuit or an open-circuit configuration is used, monitoring circuit 16 detects voltage changes associated with connecting or disconnecting resistors 12A, 12B, through 12*ₘ* from electrical circuit 10. FIGs. 3A and 3B depict exemplary voltage signals that may be detected by monitoring circuit 16.

FIG. 3A represents a closed-circuit configuration such as the embodiment shown in FIG. 1. As shown, voltage signal 42 represents an electrical signal characterized by an increasing stepped profile received by monitoring circuit 16 as energy source 34 traverses path 32. Path 32 can be subdivided into segments 32A, 32B, through 32*ₘ*, each segment preceding respective resistors 12A, 12B, through 12*ₘ* and terminates upon severing corresponding resistors 12A, 12B, through 12*ₘ* from electrical circuit 10. Initially, voltage signal is low corresponding to segment 32A. At the intersection of segments 32A and 32B, energy source 34 disconnects resistor 12A from electrical circuit 10 causing voltage change ΔV1. Upon completion of each successive segment 32B, 32C, through 32*ₘ*, voltage signal 42 changes ΔV2 through ΔV*ₘ* occur upon disconnection of resistors 12B, 12C, through 12*ₘ*.

Similarly, FIG. 3B depicts a decreasing stepped profile of voltage signal 44 of an electrical circuit with an open-circuit configuration such as the embodiment depicted by FIG. 2. In this case, voltage changes ΔV1, ΔV2, through ΔV*ₘ* correspond to the completion of segments 32A, 32B, through 32*ₘ*, respectively. However, whereas removing a resistor from parallel resistor assembly 12 causes a voltage increase, adding a resistor to parallel resistor assembly 12 causes a voltage decrease after the first resistor is connected as shown.

In either case, monitoring circuit 16 records the elapsed time for each segment of path 32. Since distances between resistors 12A, 12B, through 12*ₘ* are known, a traverse speed of energy source 34 can be calculated based on one or more segments of path 32. For instance, the distance between the first and last resistor in parallel resistance assembly 12 can be used in conjunction with the corresponding elapsed time to determine a transverse speed of energy source 34. Alternatively, intermediate speed calculations can be performed for each segment of path 32 based on the time elapsed between each resistor and the corresponding distance between resistors. These intermediate speed calculations can be averaged or individually compared to a set speed of energy source 34. With this data, calibration parameters can be determined based on a difference between the set speed and measured speed of energy source 34 to bring the measured speed in closer conformity with the set speed. Accordingly, the energy density applied to material during an additive manufacturing process is known to a greater degree of accuracy reducing the occurrence of component voids produced by under consolidation (i.e., insufficient energy density) or vaporization of material (i.e., excessive energy density), which may produce internal or external defects to the component.

While the preceding embodiments illustrate electrical circuits for measuring a transverse speed of energy source 34 along single linear paths, one or more parallel resistor assemblies 12 can be installed into region 22 to conform to any configuration of path 32. For example, electrical circuit 10 can align parallel resistor assembly 12 along an actuation direction of the additive manufacturing system corresponding to one of the axes of region 22. In this way, only one actuator of energy source 34 is actuated at a time such that the measured speed of energy source directly corresponds to a particular actuation direction of the system. In other examples, path 32 can be arranged obliquely to each of orthogonal actuation directions such that both actuators are necessary to traverse the path.

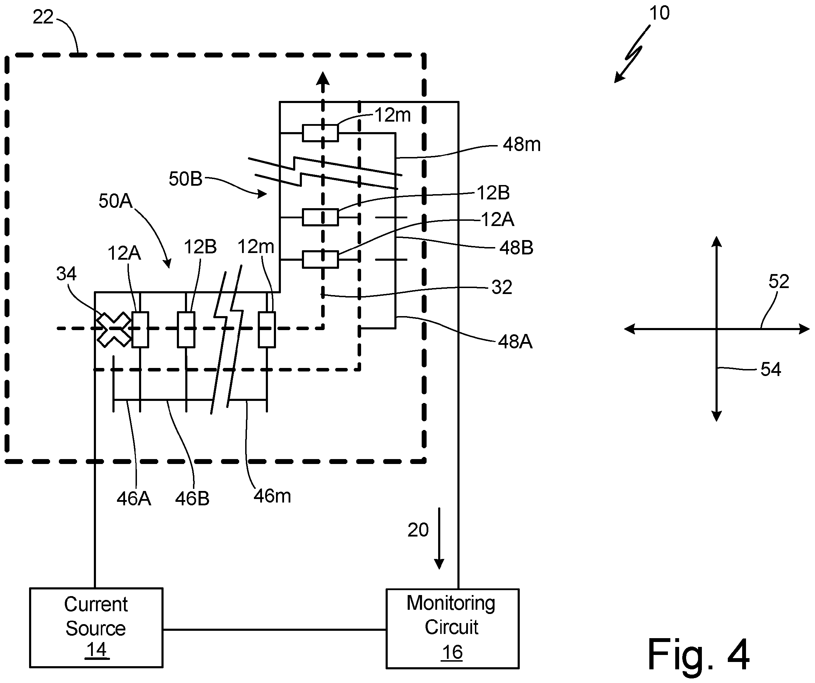

Further, electrical circuit 10 can incorporate multiple parallel resistor assemblies 12 such that path 32 includes segments 46A, 46B, through 46*ₘ* corresponding to a first actuation direction and segments 48A, 48B, through 48*ₘ* corresponding to a second actuation direction of the additive manufacturing system. As shown in FIG. 4, electrical circuit 10 includes parallel resistor assemblies 50A and 50B, each consisting of resistors 12A, 12B, through 12*ₘ* arranged in parallel as described in reference to FIG. 1 and/or FIG. 2. In this configuration, parallel resistor assembly 50A aligns with first actuation direction 52 of the additive manufacturing system, and parallel resistor assembly 50B algins with second actuation direction 54 of the additive manufacturing system.

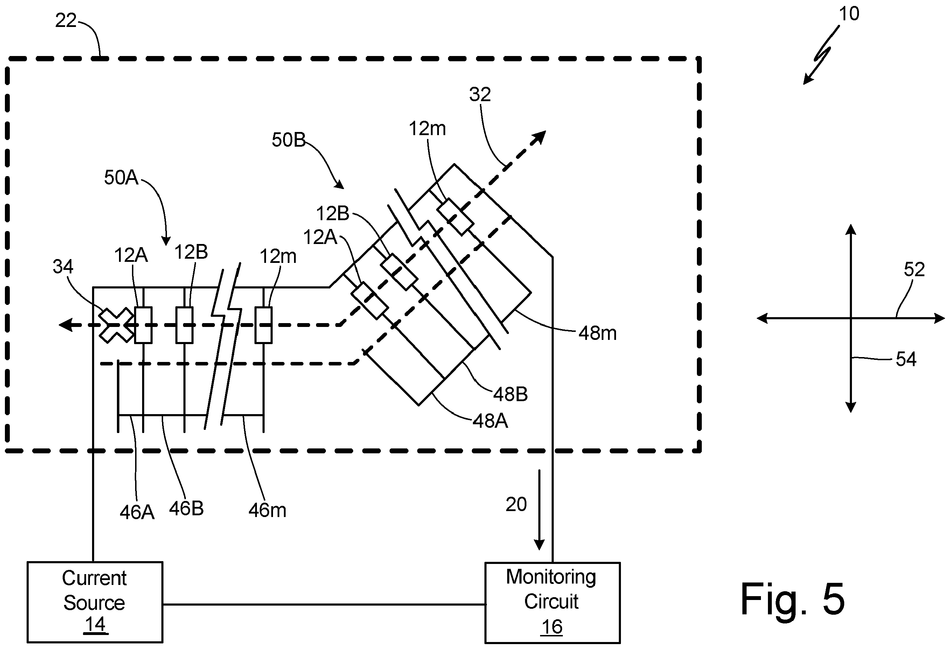

In other embodiments, parallel resistor assemblies 50A and 50B can be arranged along segments 46A, 46B, through 46*ₘ* and segments 48A, 48B, through 48*ₘ*, which extend obliquely with respect to one another as shown in FIG. 5. In this case, as least one of the parallel resistor assemblies 50A and 50B can be aligned with an actuation direction of the additive manufacturing system.

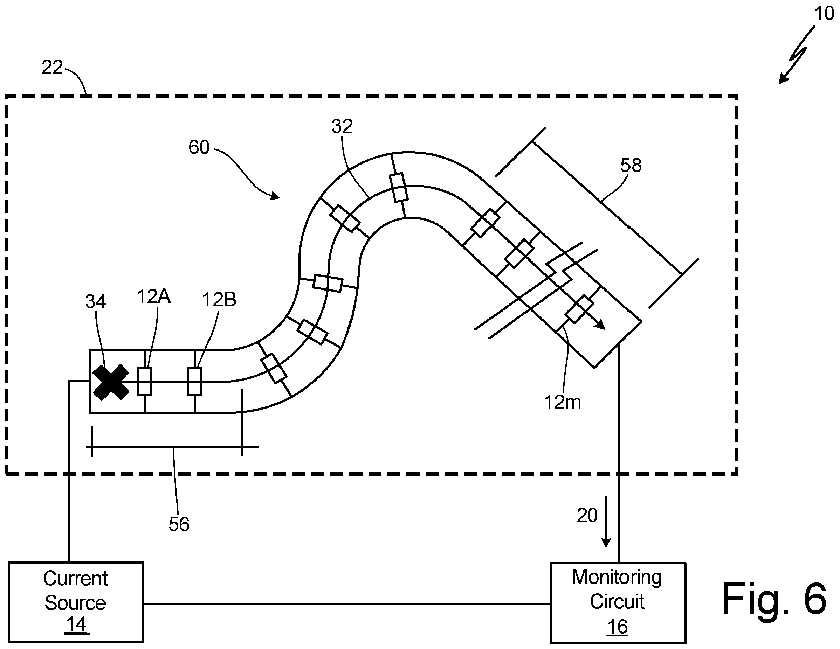

For paths that are not linear, electrical circuit 10 can include parallel resistor assemblies 12 that conform to curved paths or any other arbitrary path within region 22 of the additive manufacturing system. FIG. 6 depicts arbitrary path 32 that includes linear portions 56 and 58 as well as at least one curved portion 60. Whether path 32 is linear, curved, or any arbitrary route within region 22, an electrical signal change associated with the connection or disconnection of one or more resistors from the electrical circuit 10 can be used along with known distances between adjacent resistors to measure a traverse speed of energy source 34.

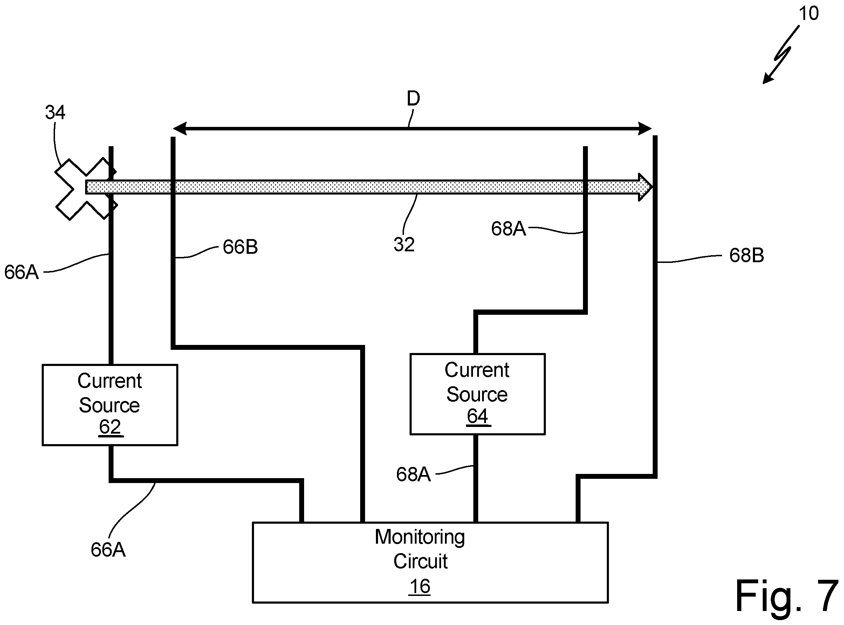

FIG. 7 depicts alternative embodiment of electrical circuit 10 whereby multiple current sources are arranged in an open-circuit configuration without the need for resistors. As shown in FIG. 7, electrical circuit 10 includes current source 62 and current source 64, each connected to monitoring circuit 16 via first leads 66A and 66B, respectively. Second leads 68A and 68B are initially disconnected from leads 66A and 66B and positioned known distance D from each other. As energy source 34 transverse path 32, it consolidates or deposits material between leads 66A and 68A, connecting current source 62 to monitoring circuit 16, signaling the start of a traverse speed measurement. When energy source 34 consolidates or deposits material between leads 66B and 68B, current source 64 connects to monitoring circuit 16 signaling the end of the traverse speed measurement. In current-based embodiments such as that shown in FIG. 7, traverse speed of energy source 34 can be determined based on the time between connecting current sources 62 and 64 to monitoring circuit 16 and known distance D between leads 66B and 68B.

### Discussion of Possible Embodiments

The following are non-exclusive descriptions of possible embodiments of the present invention.

A method for determining a speed of an energy source translatable within a region of an additive manufacturing system in accordance with this disclosure can include, among other possible steps, installing an electrical circuit within the region of the additive manufacturing system and translating the energy source along a first segment of a path within the region that intersects the electrical circuit. The method further includes modifying the electrical circuit using the energy source while the energy source traverses the path and sensing a change in an electrical signal of the electrical circuit associated with modifying the electrical circuit. A first speed of the energy source is determined based on the change in the electrical signal and a geometry of the electrical circuit along the first segment.

The method of the preceding paragraph can optionally include, additionally and/or alternatively, any one or more of the following features, configurations, additional components, and/or steps.

A further embodiment of the foregoing method can include translating the energy source along a second segment of the path within the region that intersect the electrical circuit.

A further embodiment of any of the foregoing methods can include determining a second speed of the energy source based on the change in the electrical signal and geometry of the electrical circuit along the second segment.

A further embodiment of any of the foregoing methods, wherein the first segment can coincide with a first actuation axis of the energy source.

A further embodiment of any of the foregoing methods, wherein the second segment can coincide with a second actuation axis of the energy source.

A further embodiment of any of the foregoing methods, wherein at least one of the first segment and the second segment can be linear.

A further embodiment of any of the foregoing methods, wherein modifying the electrical circuit can include adding material between a first component of the electrical circuit and a second component of the electrical circuit to affect the change in the electrical signal.

A further embodiment of any of the foregoing methods, wherein modifying the electrical circuit can include removing material to disconnect a component of the electrical circuit to affect the change in the electrical signal.

A further embodiment of any of the foregoing methods, wherein modifying the electrical circuit can include adding material to electrically connect a first lead to a second lead that closes a first circuit of the electrical circuit corresponding to a first change in the electrical signal.

A further embodiment of any of the foregoing methods, wherein modifying the electrical circuit can include adding material to electrically connect a third lead to a fourth lead the close a second circuit of the electrical circuit corresponding to a second change in the electrical signal.

A further embodiment of any of the foregoing methods, wherein the first speed can be determined based on a time between the first and second changes in the electrical signal and a distance between the second and the fourth leads.

A further embodiment of any of the foregoing methods, wherein modifying the electrical circuit can include adding material to electrically connect two or more resistors of the electrical circuit.

A further embodiment of any of the foregoing methods, wherein modifying the electrical circuit can include removing material to electrically disconnect two or more resistors of the electrical circuit.

A further embodiment of any of the foregoing methods, wherein determining the first speed of the energy source includes averaging multiple intermediate speed determinations, each intermediate speed determination based on an intermediate change in the electrical signal associated with a different portion of the first segment.

A further embodiment of any of the foregoing methods, wherein the energy source can traverse the first segment at a first set speed and the energy source can traverse the second segment at a second set speed.

A further embodiment of any of the foregoing methods can include modifying a calibration parameter of the additive manufacturing system based on a difference between a set speed of the energy source traversing he path and the first speed of the energy source.

A further embodiment of any of the foregoing methods, wherein sensing the change in the electrical signal can include sensing a voltage decrease.

A further embodiment of any of the foregoing methods, wherein sensing the change in the electrical signal can include sensing a voltage increase.

A further embodiment of any of the foregoing methods, wherein translating the energy source along the first segment can include accelerating the energy source along the path.

A further embodiment of any of the foregoing methods can include determining a second speed of the energy source based on the change in the electrical signal and a geometry of the electrical circuit along the first segment.

A further embodiment of any of the foregoing methods can further include determining an acceleration rate of the energy source based on the first speed and the second speed.

An assembly in accordance with this disclose can include, among other possible things, a fixture mountable within a region of an additive manufacturing system. The assembly includes an electrical circuit that includes a first resistor and a second resistor spaced from the first resistor along a path of an energy source of the additive manufacturing system. The assembly includes a constant current source connected to the electrical circuit, and a monitoring circuit connected in series with the constant current source and the electrical circuit configured to measure a voltage across the first resistor and the second resistor. The electrical circuit includes a first resistor and a second resistor spaced from the first resistor along a path of an energy source of the additive manufacturing system.

The assembly of the preceding paragraph can optionally include, additionally and/or alternatively, any one or more of the following features, configurations, and/or additional components.

A further embodiment of the foregoing assembly, wherein first leads of the first resistor and the second resistor can be connected.

A further embodiment of any of the foregoing assemblies, wherein second leads of the first resistor and the second resistor can be disconnected.

A further embodiment of any of the foregoing assemblies, wherein the first resistor can be connected in parallel with the second resistor.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method for determining a speed of an energy source translatable within a region (22) of an additive manufacturing system, the method comprising:
installing an electrical circuit (10) within the region (22) of the additive manufacturing system;
translating the energy source along a first segment of a path within the region (22) that intersects the electrical circuit (10);
modifying the electrical circuit (10) using the energy source while the energy source traverses the path;
sensing a change in an electrical signal of the electrical circuit (10) associated with modifying the electrical circuit^(10); and
determining a first speed of the energy source based on the change in the electrical signal and a geometry of the electrical circuit (10) along the first segment.

2. The method of claim 1, further comprising:
translating the energy source along a second segment of the path within the region (22) that intersects the electrical circuit; and
determining a second speed of the energy source based on the change in the electrical signal and geometry of the electrical circuit (10) along the second segment.

3. The method of claim 2, wherein the first segment coincides with a first actuation axis of the energy source, and wherein the second segment coincides with a second actuation axis of the energy source.

4. The method of claim 2, wherein at least one of the first segment and the second segment is linear.

5. The method of any preceding claim, wherein modifying the electrical circuit (10) includes adding material between a first component of the electrical circuit (10) and a second component of the electrical circuit (10) to affect the change in the electrical signal.

6. The method of any preceding claim, wherein modifying the electrical circuit (10) includes removing material to disconnect a component of the electrical circuit (10) to affect the change in the electrical signal, or wherein modifying the electrical circuit (10) includes adding material to electrically connect a first lead to a second lead that closes a first circuit of the electrical circuit (10) corresponding to a first change in the electrical signal, and optionally wherein modifying the electrical circuit (10) includes adding material to electrically connect a third lead to a fourth lead that closes a second circuit of the electrical circuit (10) corresponding to a second change in the electrical signal, and wherein the first speed is determined based on a time between the first and second changes in the electrical signal and a distance between the second and fourth leads.

7. The method of any preceding claim, wherein modifying the electrical circuit (10) includes adding material to electrically connect two or more resistors of the electrical circuit, or wherein modifying the electrical circuit (10) includes removing material to electrically disconnect two or more resistors of the electrical circuit.

8. The method of any preceding claim, wherein determining the first speed of the energy source includes averaging multiple intermediate speed determinations, each intermediate speed determination based on an intermediate change in the electrical signal associated with a different portion of the first segment.

9. The method of claim 2, wherein the energy source traverses the first segment at a first set speed, and wherein the energy source traverses the second segment at a second set speed.

10. The method of any preceding claim, further comprising:
modifying a calibration parameter of the additive manufacturing system based on a
difference between a set speed of the energy source traversing the path and the first speed of the energy source.

11. The method of claim 5, wherein sensing the change in the electrical signal includes sensing a voltage decrease.

12. The method of claim 6, wherein sensing the change in the electrical signal includes sensing a voltage increase.

13. The method of any preceding claim, wherein translating the energy source along the first segment includes accelerating the energy source along the path, and optionally further comprising:
determining a second speed of the energy source based on the change in the electrical signal and the geometry of the electrical circuit (10) along the first segment; and
determining an acceleration rate of the energy source based on the first speed and the second speed.

14. An assembly comprising:
a fixture mountable within a region (22) of an additive manufacturing system;
an electrical circuit (10) attached to the fixture comprising:
a first resistor; and
a second resistor spaced from the first resistor along a path of an energy source of the additive manufacturing system;
a constant current source connected to the electrical circuit; and
a monitoring circuit connected in series with the constant current source and the electrical circuit (10) configured to measure a voltage across the first resistor and the second resistor.

15. The assembly of claim 14, wherein first leads of the first resistor and the second resistor are connected, and wherein second leads of the first resistor and the second resistor are not connected, or wherein the first resistor is connected in parallel with the second resistor.
